(19) **Europäisches Patentamt / European Patent Office / Office européen des brevets**

(11) **EP 4 383 591 B1**

(12) **FASCICULE DE BREVET EUROPEEN**

(45) Date de publication et mention de la délivrance du brevet:
**25.06.2025 Bulletin 2025/26**

(21) Numéro de dépôt: **23212737.3**

(22) Date de dépôt: **28.11.2023**

(51) Classification Internationale des Brevets (IPC):
**H04B 7/185** (2006.01)   **H04W 72/00** (2023.01)

(52) Classification Coopérative des Brevets (CPC):
**H04B 7/2041; H04B 7/18539; H04W 72/044;**
H04W 84/06

(54) **PROCÉDÉ D'ALLOCATIONS DE RESSOURCES TEMPS-FRÉQUENCE DANS UN SYSTÈME DE TÉLÉCOMMUNICATIONS PAR SATELLITE AVEC FORMATION DE FAISCEAUX, DISPOSITIF ET PROGRAMME D'ORDINATEUR ASSOCIÉS**

VERFAHREN ZUR ZUWEISUNG VON ZEIT-FREQUENZ-RESSOURCEN IN EINEM SATELLITENKOMMUNIKATIONSSYSTEM MIT STRAHLFORMUNG, VORRICHTUNG UND COMPUTERPROGRAMM DAFÜR

METHOD FOR ALLOCATING TIME-FREQUENCY RESOURCES IN A SATELLITE COMMUNICATION SYSTEM WITH BEAMFORMING, ASSOCIATED DEVICE AND COMPUTER PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.12.2022 FR 2212806**

(43) Date de publication de la demande:
**12.06.2024 Bulletin 2024/24**

(73) Titulaire: **THALES**
**92190 Meudon (FR)**

(72) Inventeurs:
- **ARNAUD, Mathieu**
  **31100 TOULOUSE (FR)**

- **BAUDRY, Benjamin**
  **31100 TOULOUSE (FR)**
- **EL JAAFARI, Mohamed**
  **31100 TOULOUSE (FR)**
- **CHAMAILLARD, Baptiste**
  **31100 TOULOUSE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2013 252 655    US-A1- 2021 273 703**

## Description

### Domaine technique :

L'invention se situe dans le domaine des télécommunications satellite.

Plus exactement, l'invention concerne les systèmes de télécommunications satellite mettant en oeuvre une forme d'onde MF-TDMA (Multi-Frequency and Time-Division multiple access) ou OFDM (Orthogonal Frequency Division Multiplexing), basée sur des ressources élémentaires (dites aussi ressources blocs) mono-utilisateur, une charge utile (en anglais « payload ») numérique avec des capacités de formation de faisceaux (en anglais « beamforming ») pour centrer dynamiquement chacun des faisceaux radiofréquences de télécommunication sur le terminal utilisateur (UE pour « User Equipment ») associé sélectivement au faisceau, par exemple dans les systèmes satellite mettant en oeuvre des télécommunications selon la norme 4G ou 5G New Radio Non Terrestrial Network (5G NR NTN).

Plus précisément, l'invention concerne un procédé d'allocations de ressources temps-fréquence de télécommunications dans un système de télécommunications sans fil par satellite,

ledit système de télécommunications sans fil par satellite comprenant un satellite, des terminaux utilisateurs UE, le satellite étant adapté pour mettre en oeuvre simultanément plusieurs faisceaux de télécommunications associés chacun à un utilisateur distinct et pour centrer dynamiquement chaque faisceau sur l'UE associé ;

chaque faisceau de télécommunication étant établi en fonction de ressources temps-fréquence sélectivement allouées à l'UE associé au faisceau.

### Technique antérieure :

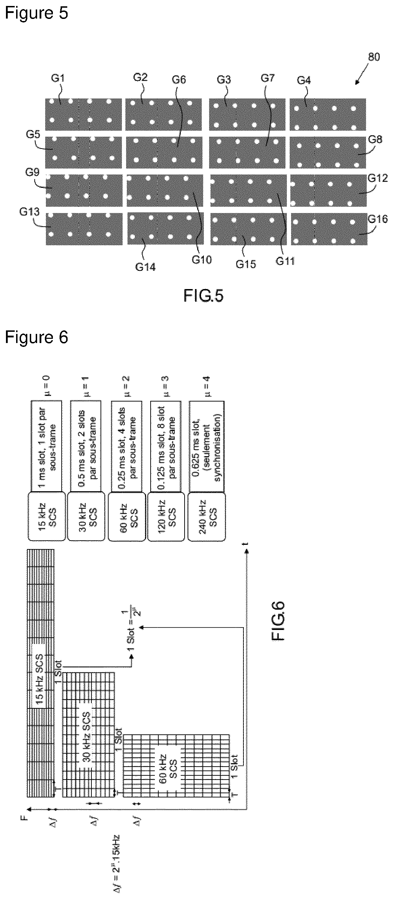

Les ressources temps-fréquence dans les télécommunications 5G NR NTN sont organisées, de façon connue, sous forme de blocs de ressources élémentaires affectées sélectivement par un module planificateur (en anglais « scheduler ») aux échanges avec un UE. Dans le domaine temporel, la ressource est divisée en symboles OFDM / slot (1 slot = succession temporelle de 14 symboles) / sous-trame / trame (voir FIG 6). Lorsqu'il alloue de la ressource à un UE, un module dit « planificateur » décide d'une allocation en termes de PRB ('Physical Resource Block') pour le domaine fréquentiel, et de symboles et/ou slots dans le domaine temporel.

Si la gestion des faisceaux n'est pas coordonnée, il arrive que les PRBs associées à deux faisceaux formés dans des directions trop proches donnent lieu à des niveaux d'interférences entraînant une dégradation rédhibitoire des performances de débit en réception. US 2021/273703 décrit un système satellitaire avec plusieurs grilles, et chaque UE localisé dans une grille utilise une partie des ressources allouée à la grille.

### Résumé de l'invention :

A cet effet, suivant un premier aspect, la présente invention décrit un procédé d'allocation de ressources temps-fréquence de télécommunications dans un système de télécommunications sans fil par satellite,

ledit système de télécommunications par satellite comprenant un satellite, des terminaux utilisateurs UE, le satellite étant adapté pour mettre en oeuvre simultanément plusieurs faisceaux de télécommunications associés chacun, à un instant donné, à un terminal utilisateur UE distinct et pour recentrer dynamiquement chaque faisceau sur l'UE associé audit faisceau ;

chaque faisceau de télécommunication étant établi en fonction de ressources temps-fréquence sélectivement alloués à l'UE associé ;

ledit procédé étant caractérisé en ce qu'il comprend les étapes suivantes mises en oeuvre par un bloc électronique d'allocations de ressources :

- obtention de la position de chaque UE ;
- étant donné un ensemble de grilles représentant chacune au moins une portion de la surface terrestre et comportant chacune une pluralité de zones non contiguës réparties dans la grille, la distance entre deux zones quelconques d'une grille étant supérieure à un seuil déterminé non nul associé à la grille, l'allocation des ressources temps-fréquences est effectuée, relativement à un instant T, par application d'au moins la règle suivante, au moins une même ressource temps-fréquence étant préalablement associée à la grille : ladite ressource temps-fréquence associée à la grille peut être allouée à chacun de 2 UE seulement si les positions obtenues desdits 2 UEs se trouvent dans des zones distinctes de ladite pluralité de zones non contiguës réparties dans la grille.

Dans des modes de réalisation, un tel procédé comprendra en outre l'une au moins des caractéristiques suivantes :

- si au cours d'une première étape d'allocation de ressources temps-fréquence en utilisant ledit ensemble de grilles associées chacune un premier seuil déterminé, il n'a pas pu être affecté de ressource temps-fréquence à au moins un UE conformément à la règle, une étape supplémentaire d'allocation est effectuée en utilisant au moins un ensemble de grille(s) supplémentaire(s) représentant au moins ladite portion de la surface terrestre et comportant chacune une pluralité de zones non contiguës réparties dans la grille, la distance entre deux zones quelconques d'une grille étant supérieure à un deuxième seuil déterminé non nul associé à la grille, inférieur au premier seuil ;

- l'allocation des ressources temps-fréquences relativement à un instant T est effectuée en outre par application d'au moins la règle suivante :
étant donné une première grille, respectivement une deuxième grille distincte de la première grille, de l'ensemble de grilles associée à une première ressource temps-fréquence, respectivement une deuxième ressource temps-fréquence distincte de la première ressource temps-fréquence : lorsqu'un UE est déterminé comme localisé à la fois dans une première zone de ladite pluralité de zones non contiguës réparties dans la première grille et une deuxième zone de ladite pluralité de zones non contiguës réparties dans la deuxième grille, il est déterminé si l'UE est plus proche du centre de la première zone ou du centre de la deuxième zone ; et si l'UE est déterminé plus proche du centre de la première zone respectivement de la deuxième zone, la première ressource temps-fréquence, respectivement la deuxième ressource temps-fréquence, lui est allouée ;

- la position d'un UE est obtenue par la mise en oeuvre des étapes suivantes :

    - calcul de valeurs des poids de formation de faisceaux maximisant la puissance de signaux prédéfinis reçus d'un UE ;

    - estimation de la Direction d'Arrivée, dite DOA, d'un signal en provenance d'un UE en fonction desdits poids de formation de faisceaux déterminés pour l'UE par application d'un algorithme de régression liant poids de formation de faisceaux et DOAs ;

    - détermination de la position de l'UE en fonction d'au moins l'intersection de la surface de la Terre et de la DOA estimée.

Suivant un autre aspect, l'invention décrit un programme d'ordinateur destiné à être stocké dans la mémoire d'un bloc électronique d'allocation de ressources dans un système de télécommunications sans fil par satellite comprenant un satellite, des terminaux utilisateurs UE, le satellite mettant en œuvre simultanément plusieurs faisceaux de télécommunications associés chacun à un utilisateur distinct et pour recentrer dynamiquement chaque faisceau sur l'UE associé ;

chaque faisceau de télécommunication étant établi en fonction de ressources temps fréquence sélectivement alloués à l'UE associé ; ledit bloc d'allocation de ressources temps-fréquence comprenant en outre un microcalculateur ;

ledit programme d'ordinateur comprenant des instructions qui, lorsqu'elles sont exécutées sur le microcalculateur, mettent en oeuvre les étapes d'un procédé suivant le premier aspect de l'invention.

Suivant un autre aspect, l'invention décrit un dispositif d'allocation de ressources temps-fréquence de télécommunications pour un système de télécommunications sans fil par satellite,

ledit système de télécommunications par satellite comprenant un satellite, des terminaux utilisateurs UE, le satellite étant adapté pour mettre en oeuvre simultanément plusieurs faisceaux de télécommunications associés chacun, à un instant donné, à un terminal utilisateur UE distinct et pour recentrer dynamiquement chaque faisceau sur l'UE associé audit faisceau ;

chaque faisceau de télécommunication étant établi en fonction de ressources temps-fréquence sélectivement alloués à l'UE associé ;

ledit dispositif (50) d'allocations de ressources étant caractérisé en ce qu'il est adapté pour obtenir la position de chaque UE et, étant donné un ensemble (80) de grilles représentant chacune au moins une portion de la surface terrestre et comportant chacune une pluralité de zones non contiguës réparties dans la grille, la distance entre deux zones quelconques d'une grille étant supérieure à un seuil déterminé non nul associé à la grille, pour effectuer l'allocation des ressources temps-fréquences relativement à un instant T, par application d'au moins la règle suivante, au moins une même ressource temps-fréquence étant préalablement associée à la grille : ladite ressource temps-fréquence associée à la grille peut être allouée à chacun de 2 UE seulement si les positions obtenues desdits 2 UEs se trouvent dans des zones distinctes de ladite pluralité de zones non contiguës réparties dans la grille.

Dans des modes de réalisation, un tel dispositif comprendra en outre l'une au moins des caractéristiques suivantes :

- le dispositif est adapté pour, si au cours d'une première étape d'allocation de ressources temps-fréquence en utilisant ledit ensemble de grilles associées chacune un premier seuil déterminé, il n'a pas pu affecter de ressource temps-fréquence à au moins un UE conformément à la règle, effectuer une étape supplémentaire d'allocation en utilisant au moins un ensemble de grille(s) supplémentaire(s) représentant au moins ladite portion de la surface terrestre et comportant chacune une pluralité de zones non contiguës réparties dans la grille, la distance entre deux zones quelconques de ladite pluralité de zones d'une grille étant supérieure à un deuxième seuil déterminé non nul associé à la grille, inférieur au premier seuil ;

- le dispositif d'allocations de ressources temps-fréquence est adapté pour effectuer l'allocation des ressources temps-fréquences relativement à un instant T, par application en outre d'au moins la règle suivante :
étant donné une première grille, respectivement une deuxième grille distincte de la première grille, de l'ensemble de grilles associée à une première ressource temps-fréquence, respectivement une deuxième ressource temps-fréquence distincte de la première ressource temps-fréquence : lorsqu'un UE est déterminé comme localisé à la fois dans une première zone de ladite pluralité de zones non contiguës réparties dans la première grille et une deuxième zone de ladite pluralité de zones non contiguës réparties dans la deuxième grille, il est déterminé si l'UE est plus proche du centre de la première zone ou du centre de la deuxième zone ; et si l'UE est déterminé plus proche du centre de la première zone respectivement de la deuxième zone, la première ressource temps-fréquence, respectivement la deuxième ressource temps-fréquence, lui est allouée ;

- le dispositif d'allocation de ressources temps-fréquence est adapté pour obtenir la position d'un UE en calculant valeurs des poids de formation de faisceaux maximisant la puissance de signaux prédéfinis reçus d'un UE, puis en estimant la Direction d'Arrivée, dite DOA, d'un signal en provenance d'un UE en fonction desdits poids de formation de faisceaux déterminés pour l'UE par application d'un algorithme de régression liant poids de formation de faisceaux et DOAs et en déterminant la position de l'UE en fonction d'au moins l'intersection de la surface de la Terre et de la DOA estimée.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 est une illustration d'un système de télécommunications satellite dans un mode de réalisation de l'invention ;

[Fig. 2] La figure 2 schématise une partie de la chaîne de traitement en réception du satellite du système de télécommunications satellite de la figure 1 dans un mode de réalisation de l'invention ;

[Fig. 3] La figure 3 schématise une partie de la chaîne de traitement en émission du satellite du système de télécommunications satellite de la figure 1 dans un mode de réalisation de l'invention ;

[Fig. 4] La figure 4 illustre des étapes d'un procédé d'allocations de ressources temps-fréquence mis en oeuvre dans le système de télécommunications satellite de la figure 1 dans un mode de réalisation de l'invention ;

[Fig. 5] La figure 5 représente un ensemble de grilles dans un mode de réalisation de l'invention ;

[Fig. 6] La figure 6 illustre le découpage de la ressource temps-fréquence en slot de 14 symboles OFDM et PRB de 12 sous-porteuses respectivement en fonction de la numérologie de trame pour la norme 5G NR ;

[Fig. 7] La figure 7 illustre une décomposition de traitements dans un mode de réalisation de l'invention avec un DBFN hybride ;

[Fig. 8] La figure 8 représente un maillage dans un mode de réalisation de l'invention ;

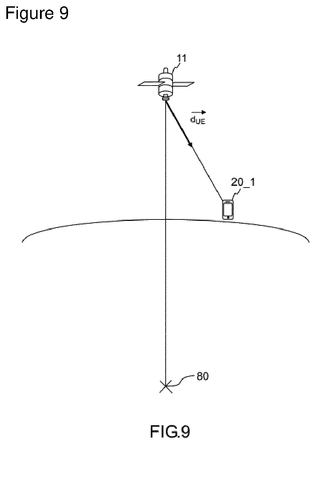

[Fig. 9] La figure 9 illustre le calcul du vecteur de direction de l'UE ;

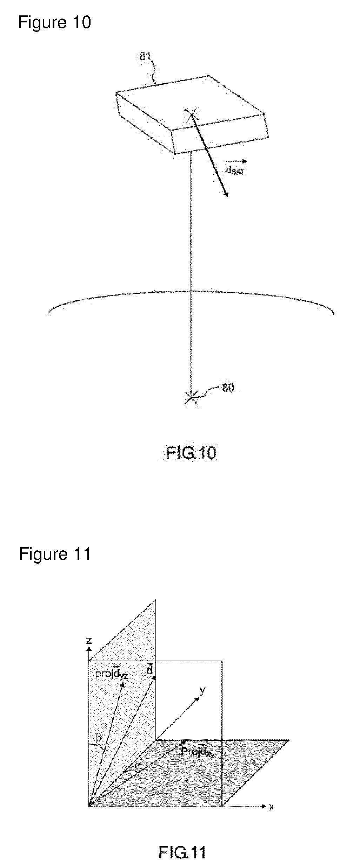

[Fig. 10] La figure 10 illustre le calcul du vecteur de direction du satellite ;

[Fig. 11] La figure 11 illustre la projection du vecteur de direction dans le repère de l'antenne satellite.

Des références identiques peuvent être utilisées dans des figures différentes lorsqu'elles désignent des éléments identiques ou comparables.

**Description détaillée** :

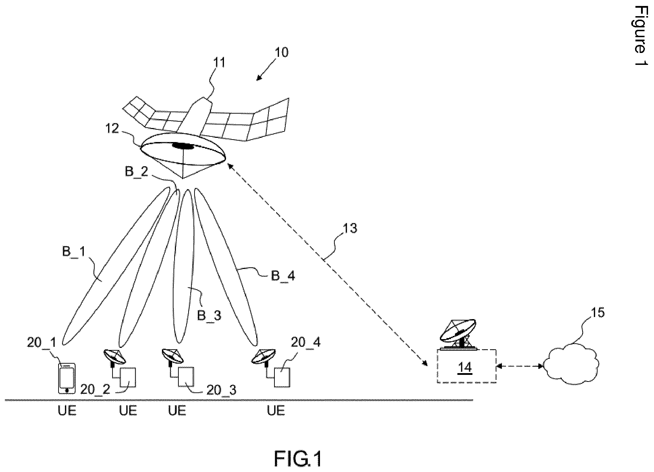

La figure 1 est une illustration d'un système de télécommunications satellite 10 dans un mode de réalisation de l'invention.

Le système de télécommunication satellite 10 comporte une pluralité de terminaux utilisateurs (UE) 20_1, 20_2, ... 20_p, p strictement supérieur à 1 (4 UE ont été représentés en figure 1) et une plateforme satellite 11.

Chaque UE comporte un bloc de traitement en émission et réception satellite et une antenne d'émission et réception satellite et est adapté pour mettre en œuvre des communications satellite avec le satellite 11 basées sur une forme d'onde MF-TDMA ou OFDM par exemple.

Ils peuvent être de type terminal fixe (exemple : 20_2) ou mobile (exemple : 20_1). Chaque UE 20_1, ..., 20_p et le satellite 11 qui le surplombe sont en visibilité directe l'un de l'autre.

La plateforme satellite 11 comportant une antenne satellite 12, par exemple MIMO, et un dispositif de traitement en émission et réception. Elle est adaptée pour mettre en œuvre des communications satellite avec les UE 20_1, ..., 20_p.

Dans des modes de réalisation, le système de télécommunication satellite 10 comporte un dispositif de traitement au sol 14 relié à la plateforme satellite 11 via un lien « Feeder » mis en œuvre via l'antenne 12 (ou via une autre antenne) de la plateforme 11 et une antenne satellite du dispositif de traitement au sol 14. Le dispositif de traitement au sol 14 est adapté dans ces modes de réalisation, pour effectuer, pour la plateforme satellite 11, des traitements par exemple gourmands en calcul ou en volume de stockage (par exemple le calcul des coefficients complexes des lois (poids) de formation de faisceaux et/ou la modulation/démodulation des symboles ...).

Les télécommunications mises en œuvre entre le satellite et chaque terminal UE sont par exemple conformes à la norme 5G NR NTN (et par exemple Et NB-IoT/eMTC (IoT NTN)) : des données sont échangées entre le satellite 11 et chaque UE, respectivement 20_1, ..., 20_p, alors en communication par la mise en œuvre d'un faisceau spécifique, respectivement B_1, ..., B_p, généré entre le satellite et cet UE et orienté spécifiquement vers cet UE. Il y a donc au moins autant de faisceaux de télécommunication distincts que d'UE en cours de communication avec le satellite à l'instant considéré (car il y a aussi des faisceaux utilisés pour véhiculer les canaux de signalisation). La largeur fréquentielle d'un faisceau est variable, un ou plusieurs ressources temps-fréquences unitaires pouvant être affectées à un instant donné à un UE en fonction de ses besoins. Le satellite 11 est adapté pour mettre en œuvre des techniques de formation de faisceaux pour générer ces faisceaux et est adapté pour, en temps réel, recentrer automatiquement le faisceau sur l'UE ciblé en fonction de la position actualisée de cet UE et de la position actualisée du satellite en cas de déplacement de celui-ci. Les données utiles sont transmises sur ces faisceaux de façon codée, sous forme de symboles OFDM, en utilisant des ressources temps-fréquences qui sont spécifiquement allouées à chaque UE, sous forme de PRB, (« Physical Resource Block ») dans le domaine fréquentiel et dans le domaine temporel, sous forme de symboles et/ou slots (la présente invention s'applique à ces ressources spécifiquement allouées ; ceci dit, on notera qu'il existe aussi dans le réseau, dans un mode de réalisation, des données envoyées à l'ensemble des UEs, par exemple sur les canaux physiques de broadcast, et les ressources temps-fréquences allouées à ces échanges ne sont pas mono-utilisateur).

De façon connue et comme représenté en figure 6, un slot temporel comporte 14 symboles OFDM successifs. Un PRB correspond à un bloc de 12 sous-porteuses successives. L'espacement référencé $\Delta f$ sur la figure 6 est égale à la valeur de SCS (« Subcarrier Spacing »).

Lorsque des données sont à échanger entre le satellite 11 et un UE 20_i, des ressources temps-fréquences sont spécifiquement allouées à ces échanges, de manière centralisée et supervisée, pour contrôler le niveau d'interférences entre les faisceaux.

Un bloc de contrôle 50, dans la plateforme satellite 11, contribue à la détermination, de cette allocation, de la manière indiquée ultérieurement. Sur chaque période d'allocation, les ressources temps-fréquences allouées sont mono-utilisateur.

Le bloc de contrôle 50 comporte une base 70 comportant les données de définition d'au moins un ensemble de grilles, un bloc d'allocation de PRB 51 et un bloc d'estimation de localisation des UEs 52.

Le calcul des coefficients complexes des lois de formation de faisceaux aux PRB s'effectue PRB par PRB, et ce, pour chaque symbole OFDM. Le coefficient par lequel est multiplié un PRB est calculé notamment en fonction de la localisation de l'UE auquel il a été alloué, de la position connue du satellite et de la fréquence centrale associée au PRB. Suivant les cas, les coefficients sont calculés localement dans la plateforme satellite 11 ou bien dans le dispositif de traitement au sol 14.

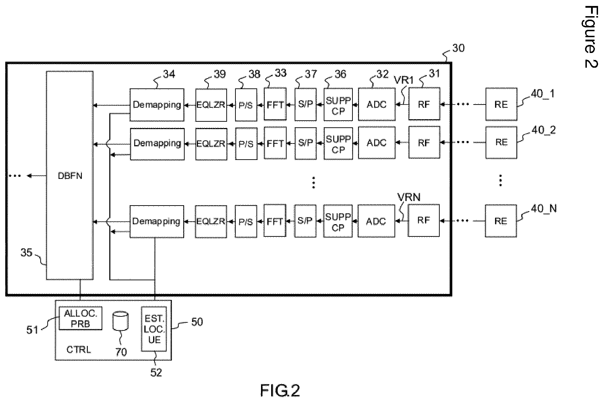

La figure 2 schématise une partie de la chaîne de traitement 30 en réception du satellite 11 du système de télécommunications satellite de la figure 1 dans un mode de réalisation de l'invention.

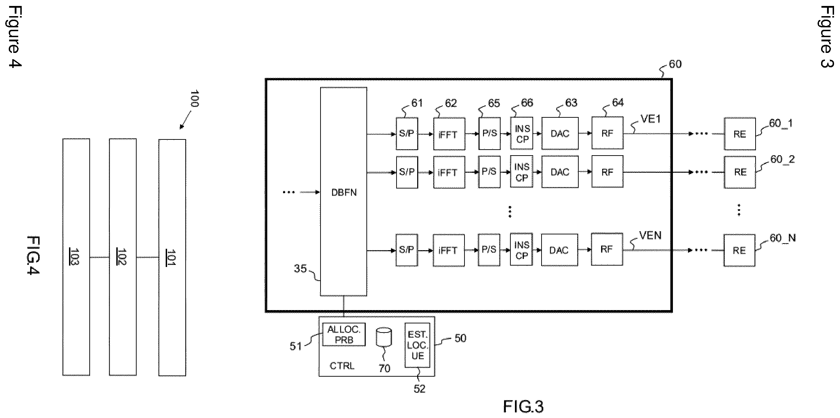

La figure 3 schématise une partie de la chaîne de traitement en émission 60 du satellite du système de télécommunications satellite de la figure 1 dans un mode de réalisation de l'invention.

De manière connue, l'indication des PRB à utiliser pour les échanges entre chaque UE et la plateforme satellite 11, lors d'une prochaine émission (ou réception) de leur part est délivrée dynamiquement par le bloc de contrôle 50 par exemple au gNB et est ensuite notifiée dynamiquement aux UE (via des signaux de contrôle), et aussi aux chaînes de traitement 30 en réception et en émission de la plateforme satellite, par exemple au moins toutes les T millisecondes, avec T compris dans la plage <0 ms ; 10 ms > par exemple).

En référence à la figure 2, la chaîne de traitement en réception est adaptée pour recevoir via des éléments rayonnants de l'antenne 12 de la plateforme satellite 11, des signaux émis par une pluralité de UEs.

La chaîne de traitement en réception 30 comporte N voies de traitement parallèles et est en outre connectée au bloc de contrôle 50 du système satellite 30.

Suivant les modes de réalisations, le bloc de contrôle 50 est embarqué dans la plateforme satellite 11, ou se trouve au sol, dans le dispositif de traitement au sol 14, ou alors ses éléments sont répartis entre le sol et la plateforme satellite. Par exemple, le bloc de contrôle est dans la gNB/eNB.

La ou les connexions entre la chaîne de traitement en réception et le bloc de contrôle 50 sont suivant les cas filaires (par exemple quand bloc 50 embarqué) et/ou sans fil (notamment si au moins une partie du bloc 50 au sol).

La chaîne de traitement en réception comprend notamment N voies de traitement parallèles VRi, i = 1 à N, alimentées chacune par le signal capté par un élément rayonnant (RE) 40_i respectif de l'antenne satellite 12.

Chaque voie de traitement VRi comporte :

- un bloc Radio Fréquence RF 31 qui est adapté pour effectuer un changement de fréquence pour descendre le signal en fréquence,

- un bloc convertisseur analogique-numérique (ADC) 32 qui numérise le signal,

- un bloc de suppression de CP (Cyclic Prefix ) 36 ;

- un bloc de transposition de série en parallèle (S/P) 37 ;

- un bloc de FFT 33 qui est adapté pour appliquer une transformation de Fourier rapide aux signaux reçus en entrée, et permet ainsi de travailler ensuite dans le domaine fréquentiel et notamment qui permet de manipuler les coefficients complexes transmis sur chaque sous-porteuse ;

- un bloc de transposition de parallèle en série (P/S) 38 ;

- un bloc d'égalisation (EQLZR) 39 ;

- un bloc 34 de Demapping qui est adapté pour filtrer les PRB en fonction de la liste d'allocation courante des PRB qui lui a été fournie par le bloc de contrôle 50, pour ne transmettre en sortie du bloc Demapping que les PRB effectivement alloués à un UE ; le bloc de Demapping utilise pour ce faire l'indication des PRB à utiliser pour les échanges entre chaque UE et la plateforme satellite 11 déterminée dynamiquement par le bloc de contrôle 50 (dans un mode de réalisation, le bloc de contrôle 50 fournit les allocations déterminées au gNB, qui ensuite affecte effectivement les ressources en fonction de ces allocations déterminées).

- un bloc DBFN 35 ("Digital Beamforming Network") est adapté pour appliquer des coefficients complexes de formation de faisceaux aux PRB (en effet, on pondère les symboles transmis sur les PRB alloués en phase et en amplitude) et utilise aussi, pour ce faire, l'indication des PRB à utiliser (fonction de chaque UE) pour les échanges depuis chaque UE vers la plateforme satellite 11 fournie dynamiquement par le bloc de contrôle 50. Ce traitement permet d'obtenir sélectivement l'ensemble des symboles émis par UE émetteur (et donc par faisceau de réception)).

Ces ensembles de symboles en sortie du DBFN 35 sont ensuite modulés/démodulés (via la fonction gNB) en fonction de la modulation numérique effectuée, localement à la plateforme satellite 11 ou encore par le bloc de traitement au sol 14, et en fonction de . l'information d'allocation des PRB.

En référence maintenant à la figure 3, la chaîne de traitement en émission 60 est adaptée pour mettre en forme et délivrer aux éléments rayonnants RE de l'antenne 12 de la plateforme satellite 11 des données utiles à destination de UEs parmi les UE 20_1, ..., 20_p.

La chaîne de traitement en émission 60 comporte le bloc DBFN 35 et N voies de traitement parallèles VE1, ..., VEN.

La chaîne de traitement en émission 60 est en outre connectée au bloc de contrôle 50 du système satellite 30.

Le bloc DBFN 35 est adapté pour appliquer des coefficients complexes de formation de faisceaux aux symboles issus de la chaîne de codage en amont qui seront ensuite transmis sur les PRB alloués à cette transmission et utilise aussi, pour ce faire, l'indication des PRBs à utiliser, fonction de chaque UE, pour les échanges depuis la plateforme satellite 11 vers les UEs et fournie dynamiquement par le bloc de contrôle 50.

Les données en sortie du bloc DBFN 35 sont fournies en entrée de chaque voie de traitement VEi, i=1 à N.

Chaque voie de traitement VEi comporte :

- un bloc de transposition de série en parallèle (S/P) 61 ;

- un bloc de iFFT 62 qui est adapté pour appliquer l'inverse d'une transformation de Fourier rapide au signal reçu en entrée en provenance du DBFN 35, et permet ainsi de passer du domaine fréquentiel au domaine temporel ;

- un bloc de transposition de parallèle en série (P/S) 65 ;

- un bloc d'insertion de préfixe cyclique (CP) 66 ;

- un bloc convertisseur numérique-analogique (DAC) 63 qui transforme le signal en analogique ;

un bloc Radio Fréquence RF 64 qui est adapté pour effectuer un changement de fréquence (conversion montante) du signal.

Le signal en sortie de la voie VEi, i=1 à N, est ensuite délivré à un élément rayonnant RE 60_i de l'antenne satellite 12, pour émission.

L'émission par les éléments rayonnants RE 60_1 à 60_N produit ainsi une pluralité de faisceaux de radiocommunications, chaque faisceau, utilisant les PRB alloués à un UE, étant dédié à ce seul UE et étant sélectivement centré sur cet UE.

Ainsi l'allocation des ressources temps-fréquences, notamment des PRB, en combinaison avec la formation de faisceau intelligente, est une tâche sensible qui affecte directement la qualité des signaux échangés, notamment le Rapport Signal sur Interférence(C/I). Il importe donc de veiller à ce que deux faisceaux proches, par exemple les faisceaux B_1 et B_2, n'utilisent pas sur les mêmes ressources temporelles (symboles/slots) de PRB identiques, ce qui donnerait lieu à des niveaux d'interférences entre les faisceaux qui dégraderait significativement les performances de débit en réception, démodulation.

L'invention propose ainsi de tirer parti de la connaissance de la localisation des UEs de les répartir sur une grille régulière lors de l'attribution des PRB, l'attribution de PRB sur la même fréquence ne pouvant se faire que pour des UEs suffisamment éloignés.

Dans un mode de réalisation de l'invention, un ensemble 80 de grilles est défini. La base 70 du bloc de contrôle 50 stocke les données de définition de l'ensemble 80 de grilles.

L'ensemble de grilles 80 comporte dans le cas considéré une pluralité de grilles, utilisées comme des tamis, pour trier les UE auxquels un même PRB peut être alloué.

Chaque grille représente la surface de la Terre visible de la plateforme satellite 11. Chaque point de grille correspond donc à une position à la surface de la Terre. Sans que cette disposition ne soit obligatoire, le point en haut à gauche de chaque grille correspond par exemple au même point de la Terre à l'extrémité correspondante de la surface visible de la Terre et un même repère est utilisé pour les différentes grilles, ainsi qu'une même échelle.

Chaque grille comporte des zones discrètes non contiguës, que l'on appellera ci-après « trous ». Dans un mode de réalisation, les trous sont disposés selon un maillage régulier en deux dimensions sur la base de cellules carrés (les trous correspondant aux sommets des cellules).

Le pattern de disposition des trous sur la grille est fonction de simples critères géométriques (distance minimale entre les UE utilisant un même PRB = distance entre les trous d'une grille) et/ou est fonction des beams patterns : la forme des beams n'est pas forcement toujours régulière surtout en cas de dépointage important : la grille est alors adaptée pour modifier/élargir la maille.

Dans le cas présent, les trous sont des cercles, ici tous de même taille. La taille du trou (ici le diamètre du cercle) représente l'hystérésis qui est accordée sur la position de l'UE potentiellement associé à ce trou. Chaque trou correspond à une portion de surface de la Terre.

Dans des modes de réalisation, un trou a une forme autre qu'un cercle, par exemple, un carré, un triangle.

Dans un mode .de réalisation, le maillage des trous est défini de sorte qu'un faisceau dirigé sur le centre du trou illumine l'ensemble du trou de manière satisfaisante (supérieure à un seuil minimal fixé) et que deux faisceaux illuminant deux trous voisins ne se chevauchent pas (en fixant un seuil maximal de puissance du faisceau à la frontière du trou qu'il illumine).

Par exemple, le diamètre du cercle correspond à une distance de quelques km à quelques dizaines de km, par exemple entre 0 km et 100 km, et la distance minimum entre deux trous voisins correspond à une distance par exemple entre quelques dizaines et quelques centaines de km, par exemple comprise dans la plage [10 km ; 900 km].

Le dimensionnement de la forme des trous et du maillage associé est fait de sorte à garantir un certain niveau d'isolement en termes de C/I entre les faisceaux susceptibles de pointer sur les trous du maillage. Ce dimensionnement prendra en compte le diagramme de formation des faisceaux qui peuvent être générés avec l'antenne satellite 12 ainsi que l'allocation de puissance réalisée par le satellite entre les faisceaux servis. En référence à la figure 5, une portion de chaque grille G1, ..., G16 (les portions correspondant à une même portion de surface de la Terre) est représentée : les trous sont représentés en blanc, le reste de la portion de grille en gris.

Dans un mode de réalisation, dans les différentes grilles G1 à G16, le maillage des points est le même, mais décalé, i.e. disposé à chaque fois différemment sur la grille.

En référence à la figure 4, dans un mode de réalisation, le bloc de contrôle 50, qui comporte le bloc d'allocation de PRB 51, le bloc d'estimation de localisation des UEs 52 et la base 70 de l'ensemble des grilles est adapté pour mettre en oeuvre les étapes d'un procédé d'allocation de PRB 100 pour le prochain intervalle temporel considéré (i.e. pour un ou plusieurs slot) selon l'invention.

Ainsi dans une étape 101, parmi tous les UE à servir dans la couverture, les UE à servir simultanément sur le prochain slot sont identifiés et le bloc d'estimation de localisation des UE 52 obtient la localisation des UEs du système 10 qui sont en visibilité de la plateforme satellite 11.

Dans une étape 102, le bloc d'allocation de PRB 51 détermine l'allocation des PRB par UE visible depuis la plateforme satellite 11 en fonction de la localisation des UEs, l'allocation des PRB par UE définissant les PRB à utiliser pour le prochain intervalle temporel considéré (à l'exclusion de ceux non alloués) pour l'émission et la réception de données entre cet UE et la plateforme satellite.

A chaque grille Gi, i = 1 à 16, de l'ensemble de grilles 80 est associé un PRB (ou un ensemble de PRBs).

Un même PRB (ou ensemble de PRBs) ne peut être associé à deux grilles distinctes de l'ensemble de grilles 80 Des PRB (ou ensemble de PRB) distincts peuvent être associés indépendamment à une même grille (i.e. sans faire partie d'un ensemble de PRB alloués en bloc à un UE) ; ces grilles sont alors considérées comme deux grilles distinctes dans la suite de l'étape 102.

L'affectation des ressources PRB est effectuée en respectant la règle suivante :

un même PRB associé à une grille ne peut être alloué à chacun de plusieurs UEs que si les UEs figurent dans des trous distincts de la grille (i.e. le PRB ne peut être alloué à deux UE ou plus qui seraient dans un même trou ; et le PRB ne peut être alloué à un UE ne figurant pas dans un trou).

Il existe de multiples manières de déterminer comment coupler les PRB aux grilles à l'étape 102, en respectant cette règle :

En fonction de critères géométriques spécifiés, le bloc d'allocation de PRB 51 associe les UEs aux trous dans les grilles, en faisant en sorte qu'un UE ne soit au final associé qu'à une seule grille et qu'un seul trou dans cette grille. Il peut y avoir plusieurs UEs dans le même trou d'une même grille. Il sélectionne les UEs qui sont autorisés à transmettre/recevoir simultanément dans le prochain intervalle de temps. Pour ce faire, il peut prendre en compte un ou des critères notamment :

- la demande de trafic et/ou

- la minimisation du nombre de grilles associées aux UEs sélectionnés (minimiser le nombre de grilles différentes permet de maximiser la réutilisation du spectre et donc de maximiser la capacité).

Puis le le bloc d'allocation de PRB 51 alloue un ou des PRBs d'abord pour chaque grille associée aux UE sélectionnés puis pour chaque UE sélectionné et associé à cette grille en respectant les règles suivantes et les contraintes sur la demande de trafic :

- les PRBs alloués à des grilles différentes doivent être différents.

- les UEs qui sont dans le même trou de la même grille doivent avoir des PRBs différents.

Par exemple, le processus mis en oeuvre à l'étape 102 est le suivant pour sélectionner les UEs autorisés à transmettre/recevoir simultanément dans le prochain intervalle de temps ; un critère de minimisation du nombre de grilles différentes associées aux groupes de UEs sélectionnés sera par exemple également pris en compte (minimiser le nombre de grilles différentes permet de maximiser la réutilisation du spectre et donc de maximiser la capacité) : pour chaque UE considéré successivement :

- - dans une sous-étape 102_1, le bloc d'allocation de PRB 51 détermine en fonction de la localisation obtenue à l'étape 101, parmi les trous de grilles restant à sélectionner, les trous de grilles dans lesquels se trouve l'UE (i.e. le trou de grille correspondant à la portion de surface de Terre dans laquelle se trouve l'UE), et il sélectionne, parmi ceux-ci, le trou de la grille dont le centre est le plus proche de l'UE ;

- dans une sous-étape 102_2, le trou ainsi sélectionné à l'étape 102_1 est supprimé de l'ensemble des trous de grilles restant à sélectionner ;

- dans une sous-étape 102_3 : les sous-étapes 102_1 et 102_2 sont itérées tant que des PRBs restent à allouer à l'UE considéré ; puis

- les étapes sous-102_1 à 102_3 sont alors réalisées pour le prochain UE considéré.

L'association d'un PRB ou d'un ensemble de PRBs exclusifs à la grille se fait pour chaque grille en fonction de la demande de trafic associée aux UE (ceux avec le plus de demande) sur chacune des grilles. Puis, le PRB associé à la grille est alloué à chaque UE associé à la grille ; ou quand un ensemble de plusieurs PRBs a été associé à la grille, l'allocation des PRBs parmi l'ensemble de PRBs exclusifs pour chaque UE associé à la même grille est effectuée en fonction du volume de la demande de trafic de cet UE : par exemple, en considérant les PRB nommés PRB1, PRB2 et PRB3 associés à une grille, elle-même associée à trois terminaux UE1, UE2, UE3 correspondant à des volumes de demande respectifs V1, V2, V3, avec V1<V2<V3, PRB1 sera par exemple affecté à chacun de UE1, UE2, UE3, PRB2 sera affecté à UE2 et UE 3 et PRB3 sera affecté à UE3.

Dans un mode de réalisation, l'allocation de PRB entre les grilles est effectuée en fonction de la localisation du UE, de sa grille associée et d'une vision d'ensemble de l'association grille et UEs servis simultanément.

Enfin, dans une étape 103, l'allocation ainsi définie pour les prochains échanges est délivrée par le bloc de contrôle 50 aux différents éléments du réseau 10 ayant besoin d'exploiter cette allocation : le gNB, les chaînes de traitement en émission et en réception du satellite 30, 60, les UEs visibles.

Puis les étapes 101 à 103 sont réitérées pour déterminer l'allocation du prochain intervalle temporel (par exemple toutes les T millisecondes).

A chaque grille associé à un PRB (ou un ensemble de PRB) se trouve ainsi associé un groupe des UEs auquel le PRB (ou au moins un PRB de l'ensemble de PRBs) a été alloué. Dans un mode de réalisation, pour chaque UE, la grille qui est en priorité retenue est celle qui comporte le trou dont l'UE est le plus proche (par exemple celle qui comporte le trou dont le centre est situé à la plus petite distance de l'UE).

Dans un mode de réalisation, à l'étape 102, Si après la mise en oeuvre de l'étape 102 (1ere passe), il reste des PRBs à allouer et des UEs n'ayant pas reçu l'allocation nécessaire, ce qui signifie que les contraintes imposées par le pattern des grilles ne peuvent plus être respectées, l'étape 102 est à nouveau mise en oeuvre (2eme passe) pour les PRBs encore à affecter relativement aux UEs encore à servir en considérant un autre ensemble de grille(s). Chaque grille de cet autre ensemble de grille(s) présente des trous plus proches les uns des autres que les grilles de l'ensemble de grilles 80 (C/I moins bons). D'autres passes peuvent être implémentées avec d'autres ensembles de grilles successivement plus « resserrées » jusqu'à épuisement des ressources ou atteinte d'un C/I fixé comme trop dégradé.

Dans un mode de réalisation (dégradé), il existe des points de la surface de la terre couverte par la plateforme satellite qui se trouvent en-dehors de tous les trous de toutes les grilles. Dans un tel cas, le trou de la grille se trouvant le plus proche d'un de ces points sera affecté au-dit point.

Dans un mode de réalisation, la localisation de chaque UE à l'étape 101 est obtenue par le bloc d'estimation de localisation 52 en fonction d'une ou plusieurs localisations du UE parmi :

- une localisation du UE fournie par le UE lui-même (par exemple par le GPS de l'UE ou exemple une localisation dérivée du récepteur GNSS de l'UE) ;

- une localisation du UE directement ou indirectement fournie par la fonction gNB dans le dispositif de traitement au sol 14, (par exemple via information de type « Channel State Information » (CSI) ;

- une localisation du UE déterminée en fonction d'une estimation de la direction d'arrivée (DOA), à l'antenne satellite 12, du signal en provenance de chaque UE.

On connaît les signaux de sounding (SRS) transmis par les UE et reçus par la plateforme satellite 11 : conformément à la norme 5G NR, ces signaux sont connus à l'avance et personnalisés pour chaque utilisateur. Des mesures régulières de ces signaux sont réalisées, conformément à la norme 5G NR, au niveau de la chaîne de réception du satellite. L'application d'un algorithme de type LMS (« Least Mean Square ») permet d'actualiser la valeur des poids de formation de faisceaux associés à chaque élément rayonnant de l'antenne de sorte à maximiser le rapport signal à bruit des signaux SRS reçus. Les lois de formation de faisceaux nouvellement obtenues permettent ainsi d'estimer la direction d'arrivée de ces mêmes signaux en provenance du UE... Cette actualisation est effectuée suivant les modes de réalisation dans la plateforme satellite 10 ou alors dans le dispositif de traitement au sol 14 (et dans ce dernier cas, les données nécessaires sont échangées sur le Feeder 13).

Dans un mode de réalisation de l'invention, à l'étape 101, le bloc d'estimation de localisation 52 (qui, comme vu précédemment, est localisé dans la plateforme satellite 11 ou dans le dispositif de traitement au sol 14 et alors échange des données avec la plateforme satellite 11 via le Feeder 13) applique un algorithme de type LMS (« Least Mean Square ») permet de déterminer la valeur des poids de formation de faisceaux associés à chaque élément rayonnant de l'antenne maximisant la puissance des signaux de sounding (signaux SRS reçus). Ces lois de formation de faisceaux nouvellement obtenues permettent ensuite d'estimer la direction d'arrivée de ces mêmes signaux en provenance du UE : le bloc d'estimation 52 applique ensuite une régression non-linéaire permet de retrouver à partir des poids dernièrement déterminés la direction d'arrivée (DOA) en terme d'élévation et d'azimut.

Ces aspects sont maintenant précisés.

Grâce au satellite 11 et au centre de la position de la cellule dirigée, la direction du faisceau est calculée et appliquée au faisceau par le DBFN (Digital Beam Froming Network).

Le centre du vecteur de direction cellulaire est considéré comme origine ; la référence 80 indique le centre de la Terre.

La direction par rapport à la normale du panneau DRA de l'antenne permet de déterminer les lois de phase à appliquer pour former le faisceau qui éclairera la cellule.

En référence aux figures 1, 2 et 3 on a :

$$\vec{d_{UE}} = (P_x^{UE} - P_x^{SAT}, P_y^{UE} - P_y^{SAT}, P_z^{UE} - P_z^{SAT})$$

$\vec{d_{SAT}}$ est la direction de la normale de l'antenne par rapport à un repère centre-terre, comme $\vec{d_{UE}}$.

Comme pour la formation de faisceaux, l'important est la direction $\vec{d}$ par rapport à la normale de l'antenne, il faut mettre le vecteur $\vec{d_{UE}}$ dans le repère de l'antenne satellite.

Ainsi, $\vec{d} = \vec{d_{UE}} - \vec{d_{SAT}}$.

Tout d'abord, deux angles à partir de la normale de l'antenne doivent être déterminés :

$\alpha$ qui est l'angle entre la normale de l'antenne (axe z) et la projection de $\vec{d}$ sur le plan (xy) appelé *proj$\vec{d}_{xy}$* soit l'azimuth ;

$\beta$ qui est l'angle entre la normale de l'antenne (axe z) et la projection de $\vec{d}$ sur le plan (yz) appelé *proj$\vec{d}_{yz}$* soit l'élévation.

Grâce à ces deux angles, il est alors possible de calculer les angles de direction d'une antenne rectangulaire à l'aide de l'algorithme suivant.

- Soit S la distance entre le centre des éléments rayonnants consécutifs dans les deux axes de l'antenne (x et y)

- Soit $N_x^{RE}$ le nombre d'éléments rayonnants dans l'axe x.

- Soit $N_y^{RE}$ le nombre d'éléments rayonnants dans l'axe y.

- Soit $\lambda$ la longueur d'onde du signal à former.

Les poids sont calculés de la façon suivante:

for

$$k_x = 0 \text{ to } N_x^{RE} - 1$$

for

$$k_y = 0 \text{ to } N_y^{RE} - 1$$

$$d_x = k_x . S . \sin(\alpha)$$

$$d_y = k_y . S . \sin(\beta)$$

$$d = \sqrt{d_x^2 + d_y^2}$$

$$W_{x,y} = e^{-2\pi d . i / \lambda}$$

Ceci permet de calculer les poids à partir d'angles connus.

Ceci étant posé, considérons maintenant le chemin inverse, c'est-à-dire comment trouver $\alpha$ et $\beta$ à partir des $W_{x,y}$ : c'est là qu'intervient la régression mentionnée ci-dessus. Soit $W_{x,y}^{tg}$ l'ensemble des poids pour chaque élément rayonnant pour lesquels on cherche à trouver $\alpha^{tg}$ et $\beta^{tg}$. La régression permet de trouver $\alpha^{tg}$ et $\beta^{tg}$ qui permet de minimiser l'erreur quadratique, c'est-à-dire minimiser $\sum_{x,y} \left| W_{x,y}^{tg} - W_{x,y} \right|^2$.

La régression peut être opérée à travers différents algorithmes bien connus de l'homme de l'art, par exemple la régression non-linéaire ou l'algorithme du gradient. Dans tous les cas, l'objectif de ces algorithmes est de trouver $\alpha^{tg}$ et $\beta^{tg}$ qui minimise l'erreur quadratique. Cela permet de déterminer le vecteur $\vec{d}$, puis sachant $\overrightarrow{d_{SAT}}$ qui est donné par la plateforme satellite qui contrôle l'attitude du satellite, $\overrightarrow{d_{UE}}$ est ensuite déterminée en fonction de $d_{SAT}$ et $\vec{d}$.

Le bloc d'estimation de localisation 52 détermine alors la position d'un UE comme l'intersection de la surface de la Terre et de la DOA ainsi estimée.

On notera que l'évaluation de la DOA et/ou de la localisation d'un UE telle que décrite ci-dessus sur la base des poids de formation de faisceaux actualisés peut être mise en oeuvre indépendamment de tout usage de la DOA ou localisation dans l'allocation des PRB.

L'invention a été décrite ci-dessus dans un mode de réalisation particulier, en référence notamment à la norme 5G NR NTN. Elle est bien sûr applicable à d'autres technologies allouant par exemple des ressources temps-fréquence OFDM, FO à base d'OFDM, mais encore DVB RCS2, MF-TDMA ...

Dans le mode de réalisation ci-dessous, l'allocation a été décrite en référence à un satellite. Dans un autre mode de réalisation, l'allocation selon l'invention est mise en oeuvre au niveau d'une constellation satellite comprenant plusieurs satellites, afin d'éviter les interférences également entre les télécommunications mettant en oeuvre différents satellites de la constellation.

Le procédé décrit peut être mis en œuvre par l'exécution d'instructions logicielles sur un processeur. Alternativement, il peut être mis en œuvre par un hardware dédié, typiquement un circuit intégré numérique, soit spécifique (ASIC) ou basé sur une logique programmable (par exemple FPGA/Field Programmable Gate Array).

Suivant les modes de réalisation, le bloc de contrôle est localisé au sol (par exemple dans le dispositif 14) ou dans la plateforme satellite 11.

Par exemple, L'architecture de l'art antérieur d'un satellite transparent est modifiée pour inclure cette fonction RU à la place du DTP (« Digital Transparent Processor ») dans la plateforme satellite 11. La charge utile devient alors régénérative et le lien Feeder 13 transporte alors les échantillons dans le domaine fréquentiel en accord avec le split fonctionnel entre le RU à bord et le DU (« Distributed Unit ») au sol. Un bon compromis est par exemple un split de type 7.3 sur le lien descendant DL et un split de type 7.2 sur le lien montant UL, ce qui permet de limiter la complexité à bord tout en limitant les sur-débits sur le Feeder 13.

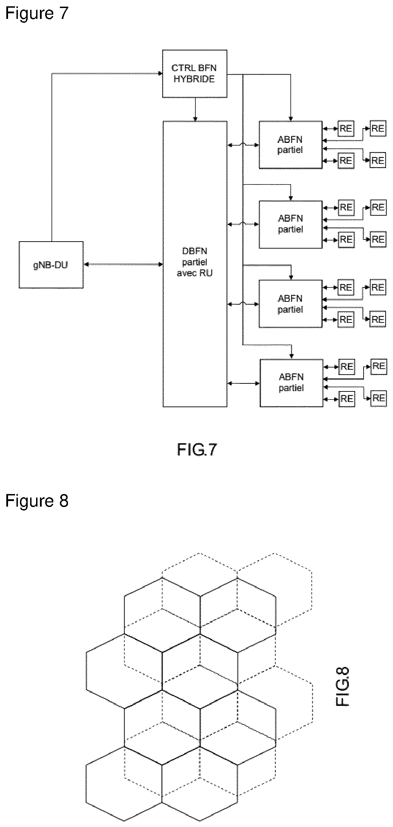

Certains types de satellites ne possèdent pas de formateurs de faisceaux numériques : de gros satellites avec des formateurs en sortie des TWTA type MFPB (« Multi-Feed Per Beam » par exemple, ou encore des satellites avec formateurs de faisceaux ABFN (constellations Ka par exemple). Une approche proposée dans les bandes millimétriques permet de maintenir une certaine agilité tout en limitant la consommation en mettant en œuvre des ABFNs, schématisée en figure 7. Globalement les ABFNs permettent d'assembler un sous-ensemble des éléments rayonnants en sous-panneaux délivrant un ou deux beams. Ces sous-faisceaux sur chaque sous-panneau sont alors assemblés ensemble par un DBFN permettant de démultiplier le nombre de faisceaux. Cette approche hybride permet de pouvoir mettre en œuvre l'invention même sur des charges utiles qui n'implémentent pas un pur DBFN.

Dans le cas d'une solution satellite VHTS à base de MFPB, l'invention permet par exemple de décaler la maille des beams pour permettre de les recentrer sur les utilisateurs à servir et « boucher » les zones entre les faisceaux qui présentent des roll-off entre 3 et 6 dB, en fonction du layout : cf figure 8, qui par rapport aux grilles de la FIG 5 correspond à des trous en forme d'hexagones. Sur la figure 8, on voit la représentation de deux grilles (l'une en trait plein et l'autre en pointillé).

## Revendications

1. Procédé d'allocation de ressources temps-fréquence de télécommunications dans un système (10) de télécommunications sans fil par satellite,

    ledit système de télécommunications par satellite comprenant un satellite (11), des terminaux utilisateurs UE (20_1, 20_2), le satellite étant adapté pour mettre en oeuvre simultanément plusieurs faisceaux de télécommunications (B_1, B_2) associés chacun, à un instant donné, à un terminal utilisateur UE distinct (20_1, 20_2) et pour recentrer dynamiquement chaque faisceau sur l'UE associé audit faisceau ;
    chaque faisceau de télécommunication (B_1, B_2) étant établi en fonction de ressources temps-fréquence sélectivement alloués à l'UE (20_1, 20_2) associé ;
    ledit procédé comprend les étapes suivantes mises en oeuvre par un bloc électronique (50) d'allocations de ressources :

        - obtention de la position de chaque UE (20_1, 20_2) ; et étant **caractérisé en ce que**:
        - étant donné un ensemble (80) de grilles (G1, G2) représentant chacune au moins une portion de la surface terrestre et comportant chacune une pluralité de zones non contiguës réparties dans la grille, la distance entre deux zones quelconques d'une grille étant supérieure à un seuil déterminé non nul associé à la grille, l'allocation des ressources temps-fréquences relativement à un instant T est effectuée par application d'au moins la règle suivante, au moins une même ressource temps-fréquence étant préalablement associée à la grille : ladite ressource temps-fréquence associée à la grille peut être allouée à chacun de 2 UE (20_1, 20_2) seulement si les positions obtenues desdits 2 UEs se trouvent dans des zones distinctes de ladite pluralité de zones non contiguës réparties dans la grille.

2. Procédé d'allocation de ressources temps-fréquence selon la revendication 1, selon lequel, si au cours d'une première étape d'allocation de ressources temps-fréquence en utilisant ledit ensemble (80) de grilles (G1, G2) associées chacune un premier seuil déterminé, il n'a pas pu être affecté de ressource temps-fréquence à au moins un UE (20_1, 20_2) conformément à la règle, une étape supplémentaire d'allocation est effectuée en utilisant au moins un ensemble de grille(s) supplémentaire(s) représentant au moins ladite portion de la surface terrestre et comportant chacune une pluralité de zones non contiguës réparties dans la grille, la distance entre deux zones quelconques d'une grille étant supérieure à un deuxième seuil déterminé non nul associé à la grille, inférieur au premier seuil.

3. Procédé d'allocation de ressources temps-fréquence selon la revendication 1 ou 2, selon lequel l'allocation des ressources temps-fréquences est effectuée, relativement à un instant T, en outre par application d'au moins la règle suivante :
   étant donné une première grille (G1), respectivement une deuxième grille (G2) distincte de la première grille, de l'ensemble (80) de grilles associée à une première ressource temps-fréquence, respectivement une deuxième ressource temps-fréquence distincte de la première ressource temps-fréquence :
   lorsqu'un UE (20_1, 20_2) est déterminé comme localisé à la fois dans une première zone de ladite pluralité de zones non contiguës réparties dans la première grille et une deuxième zone de ladite pluralité de zones non contiguës réparties dans la deuxième grille, il est déterminé si l'UE est plus proche du centre de la première zone ou du centre de la deuxième zone ; et si l'UE est déterminé plus proche du centre de la première zone, respectivement de la deuxième zone, la première ressource temps-fréquence, respectivement la deuxième ressource temps-fréquence, lui est allouée.

4. Procédé d'allocation de ressources temps-fréquence selon l'une des revendications précédentes, selon lequel la position d'un UE (20_1, 20_2) est obtenue par la mise en oeuvre des étapes suivantes :

        - calcul de valeurs des poids de formation de faisceaux maximisant la puissance de signaux prédéfinis reçus d'un UE ;
        - estimation de la Direction d'Arrivée, dite DOA, d'un signal en provenance d'un UE en fonction desdits poids de formation de faisceaux déterminés pour l'UE par application d'un algorithme de régression liant poids de formation de faisceaux et DOAs ;
        - détermination de la position de l'UE en fonction d'au moins l'intersection de la surface de la Terre et de la DOA estimée.

5. Programme d'ordinateur, destiné à être stocké dans la mémoire (70) d'un bloc électronique (50) d'allocation de ressources dans un système (10) de télécommunications sans fil par satellite comprenant un satellite (11), des terminaux utilisateurs UE (20_1, 20_2) , le satellite mettant en oeuvre simultanément plusieurs faisceaux de télécommunications (B_1, B_2) associés chacun à un utilisateur distinct (20_1, 20_2) et pour recentrer dynamiquement chaque faisceau sur l'UE associé ;

chaque faisceau de télécommunication (B_1, B_2) étant établi en fonction de ressources temps fréquence sélectivement alloués à l'UE (20_1, 20_2) associé ; ledit bloc (50) d'allocation de ressources temps-fréquence comprenant en outre un microcalculateur ;
ledit programme d'ordinateur comprenant des instructions qui, lorsqu'elles sont exécutées sur le microcalculateur, mettent en oeuvre les étapes d'un procédé selon l'une des revendications précédentes.

6. Dispositif (50) d'allocation de ressources temps-fréquence de télécommunications pour un système (10) de télécommunications sans fil par satellite,

ledit système de télécommunications par satellite comprenant un satellite (11), des terminaux utilisateurs UE (20_1, 20_2), le satellite étant adapté pour mettre en oeuvre simultanément plusieurs faisceaux de télécommunications (B_1, B_2) associés chacun, à un instant donné, à un terminal utilisateur UE distinct (20_1, 20_2) et pour recentrer dynamiquement chaque faisceau sur l'UE associé audit faisceau ;
chaque faisceau de télécommunication (B_1, B_2) étant établi en fonction de ressources temps-fréquence sélectivement alloués à l'UE (20_1, 20_2) associé ;
ledit dispositif (50) d'allocations de ressources est adapté pour obtenir la position de chaque UE (20_1, 20_2) et étant **caractérisé en ce que**:
étant donné un ensemble (80) de grilles (G1, G2) représentant chacune au moins une portion de la surface terrestre et comportant chacune une pluralité de zones non contiguës réparties dans la grille, la distance entre deux zones quelconques d'une grille étant supérieure à un seuil déterminé non nul associé à la grille, pour effectuer l'allocation des ressources temps-fréquences relativement à un instant T, par application d'au moins la règle suivante, au moins une même ressource temps-fréquence étant préalablement associée à la grille : ladite ressource temps-fréquence associée à la grille peut être allouée à chacun de 2 UE (20_1, 20_2) seulement si les positions obtenues desdits 2 UEs se trouvent dans des zones distinctes de ladite pluralité de zones non contiguës réparties dans la grille.

7. Dispositif (50) d'allocation de ressources temps-fréquence selon la revendication 6, adapté pour, si au cours d'une première étape d'allocation de ressources temps-fréquence en utilisant ledit ensemble (80) de grilles (G1, G2) associées chacune un premier seuil déterminé, il n'a pas pu affecter de ressource temps-fréquence à au moins un UE (20_1, 20_2) conformément à la règle, effectuer une étape supplémentaire d'allocation en utilisant au moins un ensemble de grille(s) supplémentaire(s) représentant au moins ladite portion de la surface terrestre et comportant chacune une pluralité de zones non contiguës réparties dans la grille, la distance entre deux zones quelconques de ladite pluralité de zones d'une grille étant supérieure à un deuxième seuil déterminé non nul associé à la grille, inférieur au premier seuil.

8. Dispositif (50) d'allocation de ressources temps-fréquence selon la revendication 6 ou 7, adapté pour effectuer l'allocation des ressources temps-fréquences relativement à un instant T, par application en outre d'au moins la règle suivante :
étant donné une première grille (G1), respectivement une deuxième grille (G2) distincte de la première grille, de l'ensemble (80) de grilles associée à une première ressource temps-fréquence, respectivement une deuxième ressource temps-fréquence distincte de la première ressource temps-fréquence :
lorsqu'un UE (20_1, 20_2) est déterminé comme localisé à la fois dans une première zone de ladite pluralité de zones non contiguës réparties dans la première grille et une deuxième zone de ladite pluralité de zones non contiguës réparties dans la deuxième grille, il est déterminé si l'UE est plus proche du centre de la première zone ou du centre de la deuxième zone ; et si l'UE est déterminé plus proche du centre de la première zone, respectivement de la deuxième zone, la première ressource temps-fréquence, respectivement la deuxième ressource temps-fréquence, lui est allouée.

9. Dispositif (50) d'allocation de ressources temps-fréquence selon l'une des revendications 6 à 8, adapté pour obtenir la position d'un UE (20_1, 20_2) en calculant valeurs des poids de formation de faisceaux maximisant la puissance de signaux prédéfinis reçus d'un UE, puis en estimant la Direction d'Arrivée, dite DOA, d'un signal en provenance d'un UE en fonction desdits poids de formation de faisceaux déterminés pour l'UE par application d'un algorithme de régression liant poids de formation de faisceaux et DOAs et en déterminant la position de l'UE en fonction d'au moins l'intersection de la surface de la Terre et de la DOA estimée.

## Patentansprüche

1. Verfahren zum Zuordnen von Zeit-Frequenz-Telekommunikationsressourcen in einem drahtlosen Satelliten-Telekommunikationssystem (10),

   wobei das Satelliten-Telekommunikationssystem einen Satelliten (11), Benutzerstationen UE (20_1, 20_2) umfasst, wobei der Satellit dazu geeignet ist, gleichzeitig mehrere Telekommunikationsstrahlen (B_1, B_2) zu implementieren, die jeweils zu einem gegebenen Zeitpunkt einer separaten Benutzerstation UE (20_1, 20_2) zugewiesen sind, und jeden Strahl dynamisch wieder auf die diesem Strahl zugewiesene UE zu zentrieren;
   wobei jeder Telekommunikationsstrahl (B_1, B_2) gemäß Zeit-Frequenz-Ressourcen gebildet wird, die der zugewiesenen UE (20_1, 20_2) selektiv zugeordnet werden;
   wobei das Verfahren die folgenden Schritte umfasst, die von einer elektronischen Ressourcen-Zuordnungseinheit (50) umgesetzt werden:

   - Erhalten der Position jeder UE (20_1, 20_2); und **dadurch gekennzeichnet ist, dass**:
   - wenn ein Satz (80) von Gittern (G1, G2) gegeben ist, die jeweils mindestens einen Abschnitt der Erdoberfläche darstellen und jeweils eine Vielzahl von nicht zusammenhängenden Zonen aufweisen, die in dem Gitter verteilt sind, wobei der Abstand zwischen zwei beliebigen Zonen eines Gitters über einem bestimmten Schwellenwert ungleich Null liegt, der dem Gitter zugewiesen ist, die Zuordnung der Zeit-Frequenz-Ressourcen relativ zu einem Zeitpunkt T durch Anwendung mindestens der folgenden Regel erfolgt, wobei mindestens eine gleiche Zeit-Frequenz-Ressource vorab dem Gitter zugewiesen wird: die dem Gitter zugewiesene Zeit-Frequenz-Ressource kann jeder von 2 UEs (20_1, 20_2) nur dann zugeordnet werden, wenn sich die erhaltenen Positionen der 2 UEs in separaten Zonen der Vielzahl von nicht zusammenhängenden, in dem Gitter verteilten Zonen befinden.

2. Verfahren zum Zuordnen von Zeit-Frequenz-Ressourcen nach Anspruch 1, wobei, wenn im Verlauf eines ersten Schritts zum Zuordnen von Zeit-Frequenz-Ressourcen unter Verwendung des Satzes (80) von Gittern (G1, G2), die jeweils einem ersten bestimmten Schwellenwert zugeordnet sind, entsprechend der Regel keine Zeit-Frequenz-Ressource mindestens einer UE (20_1, 20_2) zugeteilt werden konnte, ein zusätzlicher Zuordnungsschritt unter Verwendung mindestens eines Satzes von einem oder mehreren zusätzlichen Gittern, der mindestens den Abschnitt der Erdoberfläche darstellt und jeweils eine Vielzahl von nicht zusammenhängenden, in dem Gitter verteilten Zonen aufweist, vorgenommen wird, wobei der Abstand zwischen zwei beliebigen Zonen eines Gitters über einem bestimmten zweiten Schwellenwert ungleich Null liegt, der dem Gitter zugewiesen ist und unter dem ersten Schwellenwert liegt.

3. Verfahren zum Zuordnen von Zeit-Frequenz-Ressourcen nach Anspruch 1 oder 2, wobei die Zuordnung der Zeit-Frequenz-Ressourcen relativ zu einem Zeitpunkt T ferner durch Anwendung mindestens der folgenden Regel vorgenommen wird:
   wenn ein erstes Gitter (G1) bzw. ein zweites, von dem ersten Gitter separates Gitter (G2) aus dem Satz (80) von Gittern gegeben ist, das einer ersten Zeit-Frequenz-Ressource bzw. einer zweiten Zeit-Frequenz-Ressource zugewiesen ist, die von der ersten Zeit-Frequenz-Ressource separat ist: wenn bestimmt wird, dass sich eine UE (20_1, 20_2) gleichzeitig in einer ersten Zone der Vielzahl von nicht zusammenhängenden, in dem ersten Gitter verteilten Zonen und einer zweiten Zone der Vielzahl von nicht zusammenhängenden, in dem zweiten Gitter verteilten Zonen befindet, bestimmt wird, ob sich die UE näher am Zentrum der ersten Zone oder am Zentrum der zweiten Zone befindet; und wenn bestimmt wird, dass sich die UE näher am Zentrum der ersten Zone bzw. der zweiten Zone befindet, dieser die erste Zeit-Frequenz-Ressource bzw. die zweite Zeit-Frequenz-Ressource zugeordnet wird.

4. Verfahren zum Zuordnen von Zeit-Frequenz-Ressourcen nach einem der vorhergehenden Ansprüche, wobei die Position einer UE (20_1, 20_2) durch Umsetzen der folgenden Schritte erhalten wird:

   - Berechnen von Werten der Strahlenbildungsgewichte, die die Stärke von vordefinierten Signalen, die von einer UE empfangen werden, maximieren;
   - Schätzen der als DOA bezeichneten Ankunftsrichtung eines Signals aus einer UE gemäß den für die UE bestimmten Strahlenbildungsgewichten durch Anwenden eines Regressionsalgorithmus, der Strahlenbildungsgewichte und DOAs verknüpft;
   - Bestimmen der Position der UE gemäß mindestens dem Schnittpunkt der Erdoberfläche und der geschätzten DOA.

5. Computerprogramm, das dazu vorgesehen ist, im Speicher (70) einer elektronischen Einheit (50) zum Zuordnen von Ressourcen in einem drahtlosen Satelliten-Telekommunikationssystem (10) gespeichert zu werden, das einen Satelliten (11), Benutzerstationen UE (20_1, 20_2) umfasst, wobei der Satellit gleichzeitig mehrere Telekommunikationsstrahlen (B_1, B_2) implementiert, die jeweils einem separaten Benutzer (20_1, 20_2) zugewiesen sind, und dynamisch jeden Strahl wieder auf die zugewiesene UE zentriert;

wobei jeder Telekommunikationsstrahl (B_1, B_2) gemäß Zeit-Frequenz-Ressourcen gebildet wird, die der zugewiesenen UE (20_1, 20_2) selektiv zugeordnet sind; wobei die Einheit (50) zum Zuordnen von Zeit-Frequenz-Ressourcen ferner einen Microcomputer umfasst;
wobei das Computerprogramm Anweisungen umfasst, die bei Ausführung auf dem Microcomputer die Schritte eines Verfahrens nach einem der vorhergehenden Ansprüche umsetzen.

6. Vorrichtung (50) zum Zuordnen von Zeit-Frequenz-Telekommunikationsressourcen für ein drahtloses Satelliten-Telekommunikationssystem (10),

wobei das Satelliten-Telekommunikationssystem einen Satelliten (11), Benutzerstationen UE (20_1, 20_2) umfasst, wobei der Satellit dazu geeignet ist, gleichzeitig mehrere Telekommunikationsstrahlen (B_1, B_2) zu implementieren, die jeweils zu einem gegebenen Zeitpunkt einer separaten Benutzerstation UE (20_1, 20_2) zugewiesen sind, und jeden Strahl dynamisch wieder auf die diesem Strahl zugewiesene UE zu zentrieren;
wobei jeder Telekommunikationsstrahl (B_1, B_2) gemäß Zeit-Frequenz-Ressourcen gebildet wird, die der zugewiesenen UE (20_1, 20_2) selektiv zugeordnet werden;
wobei die Vorrichtung (50) zum Zuordnen von Ressourcen dazu geeignet ist, die Position von jeder UE (20_1, 20_2) zu erhalten, und **dadurch gekennzeichnet ist, dass**:
wenn ein Satz (80) von Gittern (G1, G2) gegeben ist, die jeweils mindestens einen Abschnitt der Erdoberfläche darstellen und jeweils eine Vielzahl von nicht zusammenhängenden Zonen aufweisen, die in dem Gitter verteilt sind, wobei der Abstand zwischen zwei beliebigen Zonen eines Gitters über einem bestimmten Schwellenwert ungleich Null liegt, der dem Gitter zugewiesen ist, wobei zum Vornehmen der Zuordnung der Zeit-Frequenz-Ressourcen relativ zu einem Zeitpunkt T durch Anwendung mindestens der folgenden Regel mindestens eine gleiche Zeit-Frequenz-Ressource vorab dem Gitter zugewiesen wird: die dem Gitter zugewiesene Zeit-Frequenz-Ressource kann jeder von 2 UEs (20_1, 20_2) nur dann zugeordnet werden, wenn sich die erhaltenen Positionen der 2 UEs in separaten Zonen der Vielzahl von nicht zusammenhängenden, in dem Gitter verteilten Zonen befinden.

7. Vorrichtung (50) zum Zuordnen von Zeit-Frequenz-Ressourcen nach Anspruch 6, die dazu geeignet ist, wenn im Verlauf eines ersten Schritts zum Zuordnen von Zeit-Frequenz-Ressourcen unter Verwendung des Satzes (80) von Gittern (G1, G2), die jeweils einem ersten bestimmten Schwellenwert zugewiesen sind, entsprechend der Regel keine Zeit-Frequenz-Ressource mindestens einer UE (20_1, 20_2) zugeteilt werden konnte, einen zusätzlichen Zuordnungsschritt unter Verwendung mindestens eines Satzes von einem oder mehreren zusätzlichen Gittern vorzunehmen, die mindestens den Abschnitt der Erdoberfläche darstellen und jeweils eine Vielzahl von nicht zusammenhängenden, in dem Gitter verteilten Zonen aufweisen, wobei der Abstand zwischen zwei beliebigen Zonen der Vielzahl von Zonen eines Gitters über einem bestimmten zweiten Schwellenwert ungleich Null liegt, der dem Gitter zugewiesen ist und unter dem ersten Schwellenwert liegt.

8. Vorrichtung (50) zum Zuordnen von Zeit-Frequenz-Ressourcen nach Anspruch 6 oder 7, die dazu geeignet ist, die Zuordnung der Zeit-Frequenz-Ressourcen relativ zu einem Zeitpunkt T durch Anwendung ferner mindestens der folgenden Regel vorzunehmen:
wenn ein erstes Gitter (G1) bzw. ein zweites, von dem ersten Gitter separates Gitter (G2) aus dem Satz (80) von Gittern gegeben ist, das einer ersten Zeit-Frequenz-Ressource bzw. einer zweiten Zeit-Frequenz-Ressource zugewiesen ist, die von der ersten Zeit-Frequenz-Ressource separat ist: wenn bestimmt wird, dass sich eine UE (20_1, 20_2) gleichzeitig in einer ersten Zone der Vielzahl von nicht zusammenhängenden, in dem ersten Gitter verteilten Zone und einer zweiten Zone der Vielzahl von nicht zusammenhängenden, in dem zweiten Gitter verteilten Zone befindet, bestimmt wird, ob sich die UE näher am Zentrum der ersten Zone oder am Zentrum der zweiten Zone befindet; und wenn bestimmt wird, dass sich die UE näher am Zentrum der ersten Zone bzw. der zweiten Zone befindet, dieser die erste Zeit-Frequenz-Ressource bzw. die zweite Zeit-Frequenz-Ressource zugeordnet wird.

9. Vorrichtung (50) zum Zuordnen von Zeit-Frequenz-Ressourcen nach einem der Ansprüche 6 bis 8, die dazu geeignet ist, die Position einer UE (20_1, 20_2) zu erhalten durch Berechnen von Werten der Strahlenbildungsgewichte, die die Stärke von vordefinierten Signalen, die von einer UE empfangen werden, maximieren, dann durch Schätzen der als DOA bezeichneten Ankunftsrichtung eines Signals aus einer UE gemäß den für die UE bestimmten Strahlenbildungsgewichten durch Anwenden eines Regressionsalgorithmus, der Strahlenbildungsgewichte und DOAs verknüpft, und durch Bestimmen der Position der UE gemäß mindestens dem Schnittpunkt der Erdoberfläche und der geschätzten DOA.

**Claims**

1. An allocation method for allocating time-frequency telecommunication resources in a wireless satellite telecommunication system (10),

   said satellite telecommunication system comprising a satellite (11), user terminals UE (20_1, 20_2), the satellite being suitable for simultaneously implementing multiple telecommunication beams (B_1, B_2) that are each associated, at a given time, with a separate user terminal UE (20_1, 20_2) and for dynamically re-centring each beam on the UE associated with said beam;
   each telecommunication beam (B_1, B_2) being established according to time-frequency resources selectively allocated to the associated UE (20_1, 20_2);
   said method comprising the following steps implemented by an electronic resource allocation unit (50):

   - obtaining the position of each UE (20_1, 20_2); and being **characterised in that**:
   - given a set (80) of grids (G1, G2) each representing at least a portion of the Earth's surface and each containing a plurality of non-contiguous areas distributed in the grid, the distance between any two areas of a grid being above a determined non-zero threshold associated with the grid, the allocation of the time-frequency resources relative to a time T is performed by applying at least the following rule, at least one and the same time-frequency resource being associated with the grid beforehand: said time-frequency resource associated with the grid may be allocated to each of 2 UEs (20_1, 20_2) only if the obtained positions of said 2 UEs are in separate areas from said plurality of non-contiguous areas distributed in the grid.

2. The time-frequency resource allocation method according to claim 1, wherein, if during a first step of allocating time-frequency resources using said set (80) of grids (G1, G2) that are each associated with a first determined threshold, it has not been possible to attribute time-frequency resources to at least one UE (20_1, 20_2) in accordance with the rule, an additional allocation step is performed using at least one set of additional grid(s) representing at least said portion of the Earth's surface and each containing a plurality of non-contiguous areas distributed in the grid, the distance between any two areas of a grid being above a second determined non-zero threshold associated with the grid, which is below the first threshold.

3. The time-frequency resource allocation method according to claims 1 or 2, wherein the allocation of the time-frequency resources is performed, relative to a time T, further by applying at least the following rule: given a first grid (G1), respectively a second grid (G2) separate from the first grid, from the set (80) of grids associated with a first time-frequency resource, respectively a second time-frequency resource separate from the first time-frequency resource: when a UE (20_1, 20_2) is determined as being located in both a first area from said plurality of non-contiguous areas distributed in the first grid and a second area from said plurality of non-contiguous areas distributed in the second grid, it is determined whether the UE is closer to the centre of the first area or to the centre of the second area; and if the UE is determined to be closer to the centre of the first area, respectively of the second area, the first time-frequency resource, respectively the second time-frequency resource, is allocated thereto.

4. The time-frequency resource allocation method according to one of the preceding claims, wherein the position of a UE (20_1, 20_2) is obtained by implementing the following steps:

   - calculating values of the beamforming weights maximising the power of predefined signals received from a UE;
   - estimating the direction of arrival, referred to as DOA, of a signal from a UE according to said beamforming weights determined for the UE by applying a regression algorithm linking beamforming weights and DOAs;
   - determining the position of the UE according to at least the intersection of the Earth's surface and the estimated DOA.

5. A computer program intended to be stored in the memory (70) of an electronic unit (50) for allocating resources in a wireless satellite telecommunication system (10) comprising a satellite (11), user terminals UE (20_1, 20_2), the satellite simultaneously implementing multiple telecommunication beams (B_ 1, B_2) that are each associated with a separate user (20_1, 20_2) and dynamically re-centring each beam on the associated UE;

each telecommunication beam (B_1, B_2) being established according to time-frequency resources selectively allocated to the associated UE (20_1, 20_2); said time-frequency resource allocation unit (50) further comprising a microcomputer;
said computer program comprising instructions that, when executed on the microcomputer, implement the steps of a method according to one of the preceding claims.

6. A device (50) for allocating time-frequency telecommunication resources for a wireless satellite telecommunication system (10),

said satellite telecommunication system comprising a satellite (11), user terminals UE (20_1, 20_2), the satellite being suitable for simultaneously implementing multiple telecommunication beams (B_1, B_2) that are each associated, at a given time, with a separate user terminal UE (20_1, 20_2) and for dynamically re-centring each beam on the UE associated with said beam;
each telecommunication beam (B_1, B_2) being established according to time-frequency resources selectively allocated to the associated UE (20_1, 20_2);
said resource allocation device (50) being suitable for obtaining the position of each UE (20_1, 20_2) and being **characterised in that**:
given a set (80) of grids (G1, G2) each representing at least a portion of the Earth's surface and each containing a plurality of non-contiguous areas distributed in the grid, the distance between any two areas of a grid being above a determined non-zero threshold associated with the grid, for performing the allocation of the time-frequency resources relative to a time T, by applying at least the following rule, at least one and the same time-frequency resource being associated with the grid beforehand: said time-frequency resource associated with the grid may be allocated to each of 2 UEs (20_1, 20_2) only if the obtained positions of said 2 UEs are in separate areas from said plurality of non-contiguous areas distributed in the grid.

7. The time-frequency resource allocation device (50) according to claim 6, suitable for, if during a first step of allocating time-frequency resources using said set (80) of grids (G1, G2) that are each associated with a first determined threshold, it has not been possible to attribute time-frequency resources to at least one UE (20_1, 20_2) in accordance with the rule, performing an additional allocation step using at least one set of additional grid(s) representing at least said portion of the Earth's surface and each containing a plurality of non-contiguous areas distributed in the grid, the distance between any two areas from said plurality of areas of a grid being above a second determined non-zero threshold associated with the grid, which is below the first threshold.

8. The time-frequency resource allocation device (50) according to claim 6 or 7, suitable for performing the allocation of the time-frequency resources relative to a time T, by further applying at least the following rule: given a first grid (G1), respectively a second grid (G2) separate from the first grid, from the set (80) of grids associated with a first time-frequency resource, respectively a second time-frequency resource separate from the first time-frequency resource: when a UE (20_1, 20_2) is determined as being located in both a first area from said plurality of non-contiguous areas distributed in the first grid and a second area from said plurality of non-contiguous areas distributed in the second grid, it is determined whether the UE is closer to the centre of the first area or to the centre of the second area; and if the UE is determined to be closer to the centre of the first area, respectively of the second area, the first time-frequency resource, respectively the second time-frequency resource, is allocated thereto.

9. The time-frequency resource allocation device (50) according to one of claims 6 to 8, suitable for obtaining the position of a UE (20_1, 20_2) by calculating values of the beamforming weights maximising the power of predefined signals received from a UE, and then by estimating the direction of arrival, referred to as DOA, of a signal from a UE according to said beamforming weights determined for the UE by applying a regression algorithm linking beamforming weights and DOAs and by determining the position of the UE according to at least the intersection of the Earth's surface and the estimated DOA.

Figure 1

FIG.1

Figure 2

FIG.2

Figure 3

FIG.3

FIG.4

Figure 4

Figure 5

FIG.5

Figure 6

FIG.6

Figure 7

FIG.7

Figure 8

FIG.8

Figure 9

FIG.9

Figure 10

FIG.10

Figure 11

FIG.11

**EP 4 383 591 B1**

## RÉFÉRENCES CITÉES DANS LA DESCRIPTION

**Documents brevets cités dans la description**

- US 2021273703 A